# EUROPEAN PATENT SPECIFICATION

(11) **EP 1 684 972 B1**
(45) Date of publication and mention of the grant of the patent: **17.08.2011**
(21) Application number: 04811137.1
(22) Date of filing: 17.11.2004
(51) Int. Cl.: B32B 5/26, B32B 7/08, D04H 1/46, D04H 5/08

(54) **THREE-DIMENSIONAL NONWOVEN FABRIC WITH IMPROVED LOFT AND RESILIENCY**
DREIDIMENSIONALER VLIESSTOFF MIT VERBESSERTER BAUSCHIGKEIT UND ELASTIZITÄT
TISSU NON TISSE TRIDIMENSIONNEL A GONFLANT ET RESILIENCE AMELIORES

(30) Priority: 19.11.2003 US 523443 P
(43) Date of publication of application: 02.08.2006
(73) Proprietor: Polymer Group, Inc., Charlotte NC 28269 (US)
(72) Inventor: MOODY, III, Ralph, Charlotte, NC 28117 (US); RICK, Augustine, Sherrills Ford, NC 28673 (US)
(74) Representative: Grünecker, Kinkeldey, Stockmair & Schwanhäusser Anwaltssozietät
(86) International application number: PCT/US2004/038315
(87) International publication number: WO 2005/052237

(56) References cited:
- WO-A1-02/31249
- WO-A1-2005/007962
- WO-A2-03/057960
- US-A- 5 093 190
- US-A- 5 098 764
- US-A- 5 144 729
- US-A- 6 063 717
- US-A1- 2003 135 967

## Description

The present invention generally relates to a hydroentangled nonwoven fabric, and more specifically, to a lofty three-dimensional nonwoven fabric hydroentangled on a three-dimensional image transfer device, wherein the image imparted into the fabric comprises a distinctive internal void space lending to the loft and resiliency of the image.

### Background of the Invention

The production of conventional textile fabrics is known to be a complex, multi-step process. The production of fabrics from staple fibers begins with the carding process where the fibers are opened and aligned into a feedstock known as sliver. Several strands of sliver are then drawn multiple times on a drawing frames to further align the fibers, blend, improve uniformity as well as reduce the sliver's diameter. The drawn sliver is then fed into a roving frame to produce roving by further reducing its diameter as well as imparting a slight false twist. The roving is then fed into the spinning frame where it is spun into yarn. The yarns are next placed onto a winder where they are transferred into larger packages. The yarn is then ready to be used to create a fabric.

For a woven fabric, the yarns are designated for specific use as warp or fill yarns. The fill yarns (which run on the y-axis and are known as picks) are taken straight to the loom for weaving. The warp yarns (which run on the x-axis and are known as ends) must be further processed. The large packages of yarns are placed onto a warper frame and are wound onto a section beam were they are aligned parallel to each other. The section beam is then fed into a slasher where a size is applied to the yarns to make them stiffer and more abrasion resistant, which is required to withstand the weaving process. The yarns are wound onto a loom beam as they exit the slasher, which is then mounted onto the back of the loom. The warp yarns are threaded through the needles of the loom, which raises and lowers the individual yarns as the filling yarns are interested perpendicular in an interlacing pattern thus weaving the yarns into a fabric. Once the fabric has been woven, it is necessary for it to go through a scouring process to remove the size from the warp yarns before it can be dyed or finished. Currently, commercial high-speed looms operate at a speed of 1000 to 1500 picks per minute, where a pick is the insertion of the filling yarn across the entire width of the fabric. Sheeting and bedding fabrics are typically counts of 80x80 to 200x200, being the ends per inch and picks per inch, respectively. The speed of weaving is determined by how quickly the filling yarns are interlaced into the warp yarns; therefore looms creating bedding fabrics are generally capable of production speeds of 12.7 cm to 47.6 cm (5 inches to 18.75 inches) per minute.

In contrast, the production of nonwoven fabrics from staple fibers is known to be more efficient than traditional textile processes as the fabrics are produced directly from the carding process.

Nonwoven fabrics are suitable for use in a wide variety of applications where the efficiency with which the fabrics can be manufactured provides a significant economic advantage for these fabrics versus traditional textiles. However, nonwoven fabrics have commonly been disadvantaged when fabric properties are compared, particularly in terms of surface abrasion, pilling and durability in multiple-use applications. Hydroentangled fabrics have been developed with improved properties, which are a result of the entanglement of the fibers, or filaments in the fabric providing improved fabric integrity. Subsequent to entanglement, fabric durability can be further enhanced by the application of binder compositions and/or by thermal stabilization of the entangled fibrous matrix.

U.S. Patent No. 3,485,706, to Evans discloses processes for effecting hydroentanglement of nonwoven fabrics. More recently, hydroentanglement techniques have been developed which impart images or patterns to the entangled fabric by effecting hydroentanglement on supportive foraminous surfaces.

Often nonwoven fabrics comprise raised images that have been imparted by way of a three-dimensional image transfer device, embossed screen, three-dimensionally surfaced belts, or perforated drum. U.S. Patent No. 5,674,591, to James, et al., is representative of such nonwoven fabrics. However, such fabrics comprise raised images that easily collapse upon themselves offering little resistance and poor recovery when placed in contact with a solid surface. For cleaning purposes, it is beneficial for a substrate to include a lofty, resilient raised image, so as to properly pick-up and retain particulates within the substrate.

A need exists for a three-dimensionally imaged nonwoven fabric, wherein the overall fabric exhibits improved loft and the imparted image demonstrates resiliency against a solid surface.

### Summary of the Invention

The present invention is directed to a method of making a lofty three-dimensional nonwoven fabric comprising a substantially planar background portion and at least one resilient raised portion, wherein said fabric comprises one or more internal void spaces between said background portion and said raised portion, comprising the steps of a) providing a precursor web; b) providing a support layer; c) providing a foraminous surface; d) consolidating said precursor web and said support layer; e) advancing said consolidated web onto said foraminous surface; and f) hydroentangling said consolidated web on said foraminous support member, wherein said web is hydraulically impacted with 19-44 kw*h N/kg (13-30hp-hr-lbf/lbm). Furthermore, the present invention is directed to a lofty three-dimensionally imaged nonwoven fabric comprised of a background region, at least one raised region, and one or more internal void spaces between said background portion and said raised portion, wherein said fabric comprises a raised region having a resiliency of recovery over 75% after a 34 hour period when under an interlayer pressure measure of 0.014 to 0.138 bar (0.2 to 2.0 pounds per square inch) under 0.34 bar (0.5 psi) of pressure for a time period of seven days.

Nonwoven fabrics are used in a wide variety of applications where the engineered qualities of the fabric can be advantageously employed. These types of fabrics differ from traditional woven or knitted fabrics in that the fabrics are produced directly from a fibrous mat, eliminating the traditional textile manufacturing processes of multi-step yarn preparation, and weaving or knitting. Entanglement of the fibers or filaments of the fabric acts to provide the fabric with a useful level of integrity. Subsequent to entanglement, fabric integrity can be further enhanced by the application of binder compositions and/or by thermal stabilization of the entangled fibrous matrix.

The nonwoven fabric of the present invention exhibits improved loft and resiliency, wherein the fabric has a background portion in one plane thereof and raised portions in another plane thereof, as described in U.S. Patent No. 5,674,591, to James . Further, the raised fibrous portions of the nonwoven fabric comprise an internal void space. In accordance with the present invention, a first embodiment comprises a first fibrous precursor web, which is placed in juxtaposition with a support layer, such as a spunbond nonwoven fabric. The precursor web and support layer may be consolidated by pre entanglement prior to advancement onto a foraminous surface. Once positioned upon the foraminous surface, the consolidated fabric is exposed to an increased volume of water at low levels of pressure so as to displace a portion of the fibers from the support layer to create an internal void space between the background portion and raised fibrous portion. Further, the impact imparted to the fabric from the increased volume of water at low levels of pressure creates a resilient raised portion that is less affected by the applied interlayer pressure upon winding the fabric into a rolled good.

It has been contemplated that a foraminous support member may include, but not limited to foraminous metal shells, perforated screens, embossed screen, three-dimensionally surfaced belts, and ablated thermoplastic drums, wherein the fibers and/or filaments of the nonwoven fabric are hydraulically coerced into the respective voids embedded within the foraminous support member. In a second embodiment, the nonwoven fabric of the present invention may comprise three or more layers, wherein the additional layers may be a woven, nonwoven, additional supportive layers, and/or film, depending on the desired end use application. Further, the imaged nonwoven fabric may be optionally treated with one or more performance or aesthetic modifying compositions to further alter the fabric structure or to meet end-use article requirements, such as mechanical compaction, printing, or dyeing. A polymeric binder composition can be selected to enhance durability characteristics of the fabric, while maintaining the desired softness and drapeability of the three-dimensionally imaged fabric. A surfactant can be applied so as to impart hydrophilic properties. In addition, electrostatic modifying compound can be used to aid in cleaning or dusting applications. Further still, one or more internal void spaces within the fabric may act as a storage unit that can be impregnated with various dry or aqueous cleaning compounds.

In a third embodiment, the imaged nonwoven fabric of the invention may comprise a pattern of one or more apertures. The apertures may extend entirely or partially through the substrate, and/or may be distributed in an organized fashion or randomly scattered through out the resultant fabric.

Other features and advantages of the present invention will become readily apparent from the following detailed description, the accompanying drawings, and the appended claims.

### Brief Description of the Drawings

FIGURE 1 is a diagrammatic view of an apparatus for manufacturing a nonwoven fabric, embodying the principles of the present invention;

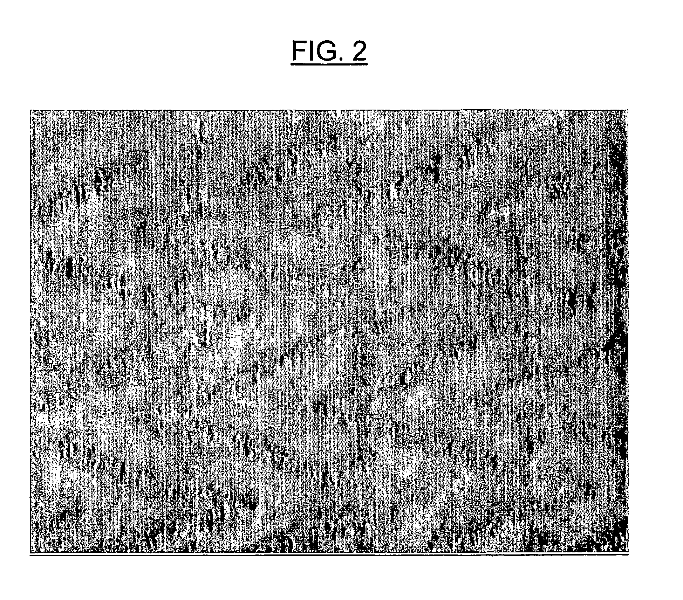

FIGURE 2 is a photomicrograph of a nonwoven fabric made in accordance with the present Invention;

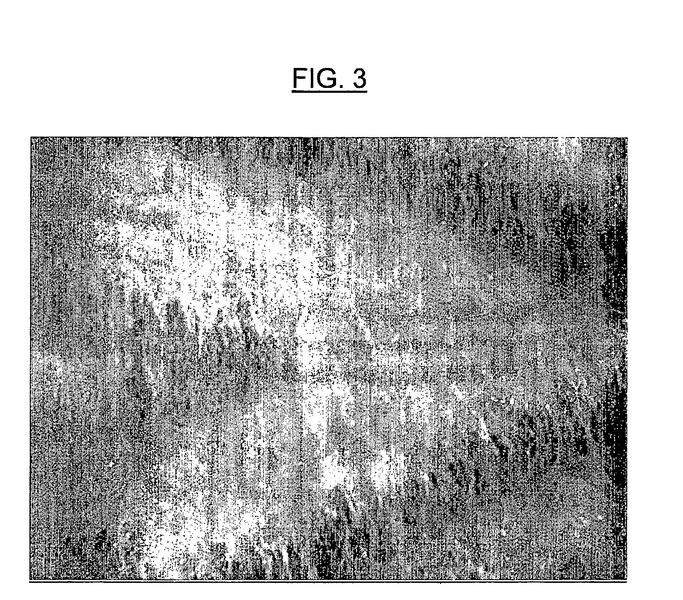

FIGURE 3 is a photomicrograph of a nonwoven fabric made in accordance with the present invention; and

FIGURES 4 and 5 are cross-sectional views illustrating an internal void space of the present fabric.

### Detailed Description

There is shown in the drawings and will hereinafter be described a presently preferred embodiment of the invention.

The present invention relates to a lofty hydroentangled nonwoven fabric comprising a substantially planar background portion and at least one raised portion integrally forming a resilient three-dimensional pattern and/or image projected out of the planar background portion, wherein the hydroentangling process, which utilizes an increased volume of water at low levels of pressure, displaces a portion of the fibers from the support layer to create an internal void space between the background portion and raised fibrous portion.

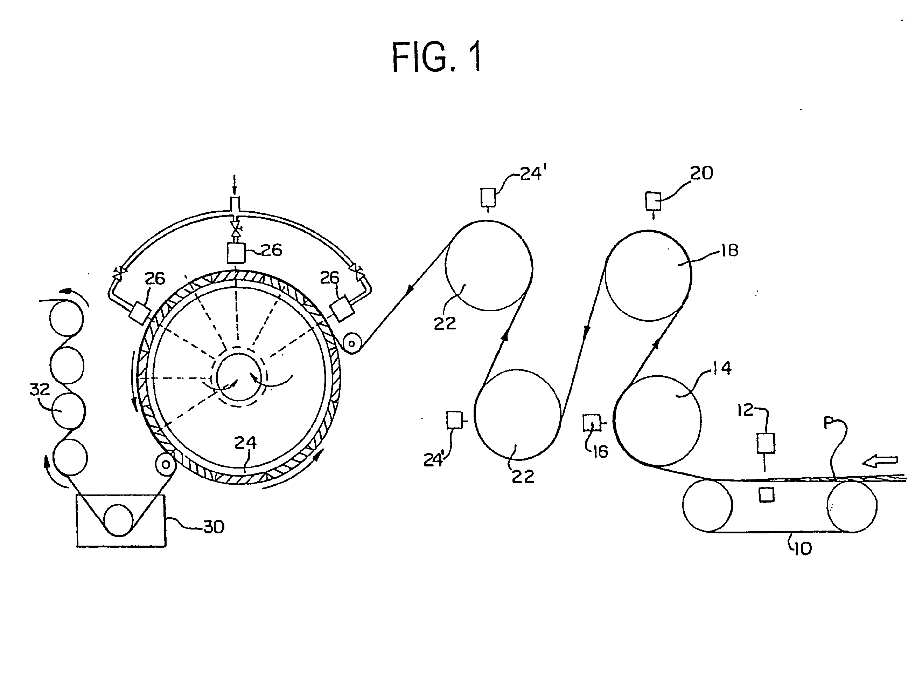

With reference to FIGURE 1, therein is illustrated an apparatus for practicing the present method for forming a nonwoven fabric. The manufacture of a nonwoven fabric embodying the principles of the present invention is initiated by providing a precursor nonwoven web. The precursor web can be comprised of fibers or filaments selected from natural or synthetic composition, of homogeneous or mixed fiber length. Suitable natural fibers include, but are not limited to, cotton, wood pulp and viscose rayon. Synthetic fibers, which may be blended in whole or part, include thermoplastic and thermoset polymers. Thermoplastic polymers suitable for blending include polyolefins, polyamides and polyesters. The thermoplastic polymers may be further selected from homopolymers; copolymers, conjugates and other derivatives including those thermoplastic polymers having incorporated melt additives or surface-active agents. The profile of the fiber or filament is not a limitation to the applicability of the present invention. Staple lengths are selected in the range of 0,64 cm to 20,32 cm (0.25 inch to 8 inches), the range of 2,54 cm to 5,08 cm (1 to 2 inches) being preferred and the fiber denier selected in the range of 1 to 15, the range of 1.5 to 6 denier being preferred for general applications. The profile of the fiber is not a limitation to the applicability of the present invention. The precursor web is preferably carded and air-laid or cross-lapped to form a precursor web, designated P.

In accordance with the present invention, a support layer is introduced to the precursor nonwoven web. Support layers reduce the extensibility of the resultant three-dimensional imaged nonwoven fabric, thus reducing the possibility of three-dimensional image distortion and further enhancing fabric durability. Preferably, a thermoplastic spunbond web acts as the support layer, but other suitable support layers may include unidirectional monofilament, bi-directional monofilament, as well as other various scrim materials. The support layer is placed in juxtaposition with the precursor web. The precursor web and support layer may be consolidated by pre-entanglement prior to advancement onto a foraminous surface. Once positioned upon the foraminous surface, the consolidated fabric is exposed to an increased volume of water at low levels of pressure so as to displace a portion of the fibers from the support layer creating an internal void space between the background portion and raised fibrous portion.

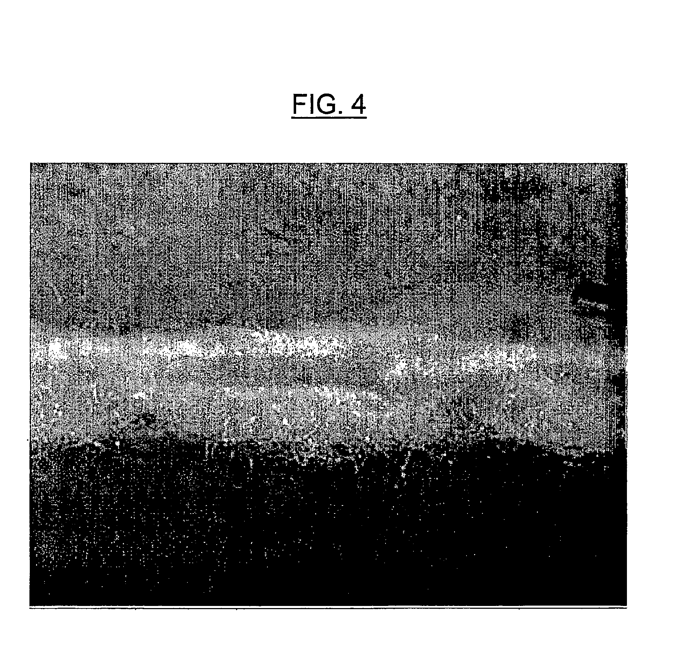

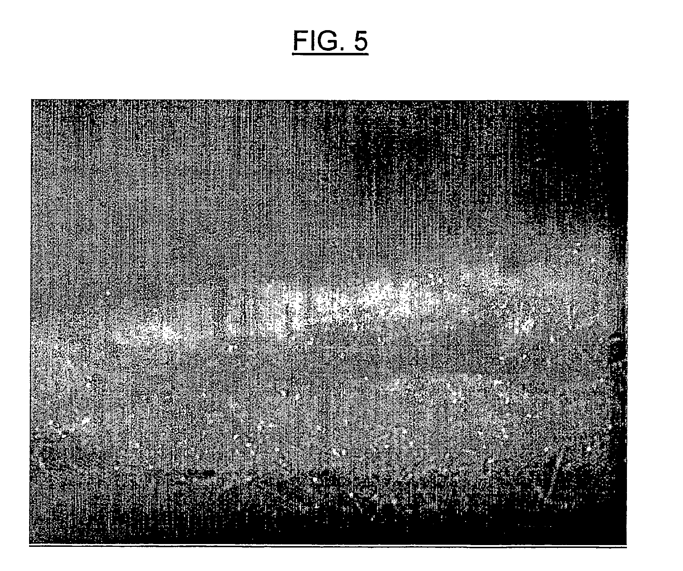

In order to displace the fibers so as to create a resilient image with an internal void space, as is illustrated in FIGURES 4 and 5, the fabric is impacted with a high volume of hydraulic energy at low pressures. Preferably the hydroentangled nonwoven fabric is impacted with about 19-44 kw·h·N/kg (13-30 hp-hr-lbf/lbm), and more preferably impacted with about 19-32 kW·h·N/kg (13-22 hp-hr-lbf/lbm). Further, the resiliency that the raised portion exhibits due to the aforementioned impact is such that when the interlayer pressure measure is about 0,014 to 0,138 bar (0.2 to 2.0 pounds per square inch) under approximately 0,34 bar (0.5 psi) of pressure for a time period of seven to ten days, upon release of interlay pressure, the raised portions will recover over 75% of uncompressed caliper after a 34 hr. period. Interlayer pressure distributions are referred to in The Mechanics of Web Handling by David R. Roisum, Ph.D. on pages 30-33, wherein it is discussed that the winding tension placed on the fabric can result in a loss of the overall fabric bulk.

It has been contemplated that the fabric of the present invention may be that of a laminate structure, wherein the precursor nonwoven web may combined with three or more additional fabric layers. Such layers include, but are not limited to, elastomeric fabrics, spunmelt fabrics, additional carded webs, and various films. In general, spunmelt fabrics include the formation of continuous, as well as discontinuous filament nonwoven fabrics. Nonwoven fabrics comprised of continuous filament formation involves the practice of the spunbond process. A spunbond process involves supplying a molten polymer, which is then extruded under pressure through a large number of orifices in a plate known as a spinneret or die. The resulting continuous filaments are quenched and drawn by any of a number of methods, such as slot draw systems, attenuator guns, or Godet rolls. The continuous filaments are collected as a loose web upon a moving foraminous surface, such as a wire mesh conveyor belt. When more than one spinneret is used in line for the purpose of forming a multi-layered fabric, the subsequent webs is collected upon the uppermost surface of the previously formed web. The web is then at least temporarily consolidated, usually by means involving heat and pressure, such as by thermal point bonding. Using this means, the web or layers of webs are passed between two hot metal rolls, one of which has an embossed pattern to impart and achieve the desired degree of point bonding, usually on the order of 10 to 40 percent of the overall surface area being so bonded.

A related means to the spunbond process for forming a layer of a nonwoven fabric is the melt blown process. Again, a molten polymer is extruded under pressure through orifices in a spinneret or die. High velocity air impinges upon and entrains the filaments as they exit the die. The energy of this step is such that the formed filaments are greatly reduced in diameter and are fractured so that microfibers of finite length are produced. This differs from the spunbond process whereby the continuity of the filaments is preserved. The process to form either a single layer or a multiple-layer fabric is continuous, that is, the process steps are uninterrupted from extrusion of the filaments to form the first layer until the bonded web is wound into a roll. Methods for producing these types of fabrics are described in U.S. Patent No. 4,041,203.

Additionally, suitable nano-denier continuous filament layers can be formed by either direct spinning of nano-denier filaments or by formation of a multicomponent filament that is divided into nano-denier filaments prior to deposition on a substrate layer. U.S. Patents No. 5,678,379 and No. 6,114,017 exemplify direct spinning processes practicable in support of the present invention. U.S. Patents No. 5,678,379 and No. 6,114,017 exemplify direct spinning processes practicable in support of the present invention.

The present invention may include a reticulated film, microporous film, or monolithic film. A suitable process for forming a reticulated film is by utilization of the Reticulon Technology, as described in U.S. Patent No. 4,381,326 to Kelly. A suitable microporous film layer can include materials such as those reported in U.S. Patent No. 5,910,225 in which pore-nucleating agents are used to form the micropores. Monolithic films as reported in U.S. Pat. No. 6,191,221 can also be utilized as a suitable film laminate means.
It is also within the purview of the present invention that a binder material can be either incorporated as a fusible fiber in the formation of the precursor nonwoven web or as a liquid fiber adhesive applied after imaged fabric formation. The binder material will further improve the durability of the resultant imaged nonwoven fabric during use.

FIGURE 1 further illustrates a hydroentangling apparatus for forming nonwoven fabrics in accordance with the present invention. The apparatus includes a foraminous forming surface in the form of belt 10 upon which the precursor web P is positioned for pre-entangling by entangling manifold 12. Pre-entangling of the precursor web, prior to imaging and patterning, is subsequently effected by movement of the web P sequentially over a drum 14 having a foraminous forming surface, with entangling manifold 16 effecting entanglement of the web. Further entanglement of the web is effected on the foraminous forming surface of a drum 18 by entanglement manifold 20, with the web subsequently passed over successive foraminous drums 20, for successive entangling treatment by entangling manifolds 24, 24' Three-dimensional imaging and patterning can be effected on three-dimensional image transfer device 24 by the action of manifolds 26. Subsequent to hydroentanglement, the three-dimensionally imaged fabric may be subjected to one or more variety of post-entanglement performance modifying treatments such as at 20. Such treatments may include application of a polymeric binder composition, mechanical compacting, application of surfactant or electrostatic compositions, printing or dyeing, and like processes. The fabric can be dried on suitable drying cans 32.

The disclosed nonwoven fabrics of the present invention are suitable for various home, hygiene, medical, and industrial end-use applications, including personal care wipes and dusting wipes. The nonwoven fabric is suitable for cleaning purposes, wherein the lofty, resilient, raised image assists with the collection of particulates and the retention of particulates within the substrate. The imaged fabric may also be used in various hygiene applications wherein the ductile and tactile properties of the fabric are suitable for cleansing the skin. Further, the internal void spaces may be impregnated with a soap and/or emollient to assist with the cleansing process making it more convenient for the user. The nonwoven fabric may be used as a component within an absorbent article, such as a fluid acquisition layer, wherein a lofty, resilient fabric is desired. Other end-use applications include medical fabrics, such as gowns and drapes, as well as industrial fabrics, such as protective apparel and outdoor fabric, including but not limited to car covers and other outdoor equipment covers.

It has been contemplated that the imaged nonwoven fabric can be further treated with one or more performance or aesthetic modifying composition to further alter the fabric structure or to meet end-use article requirements.

## Claims

1. A method of making a lofty three-dimensional nonwoven fabric comprising a substantially planar background portion and at least one resilient raised portion, wherein said fabric comprises one or more internal void spaces between said background portion and said raised portion, comprising the steps of:
a. providing a precursor web;
b. providing a support layer;
c. providing a foraminous surface;
d. consolidating said precursor web and said support layer;
e. advancing said consolidated web onto said foraminous surface; and
f. hydroentangling said consolidated web on said foraminous support member, wherein said web is hydraulically impacted with 19-44 kW*h*N/kg (13-30 hp-hr-lbf/lbm (horsepower-hour-pounds force/pounds mass).

2. A method of making a lofty three-dimensionally imaged nonwoven fabric as in claim 1, wherein said support layer is a thermoplastic spunbond web.

3. A lofty three-dimensionally imaged nonwoven fabric comprised of a background region, at least one raised region, and one or more internal void spaces between said background portion and said raised region, wherein said fabric comprises a raised region having a resiliency of recovery over 75% after a 34 hour period when under an interlayer pressure measure of 0.014 to 0.138 bar (0.2 to 2.0 pounds per square inch) under 0.34 bar (0.5 psi) of pressure for a time period of seven days.

4. A lofty three-dimensionally imaged nonwoven fabric as in claim 3, wherein said internal void space between said background region and said raised region is impregnated with soap.

## Patentansprüche

1. Verfahren zum Herstellen eines erhabenen, dreidimensionalen Faservlieses, umfassend einen im wesentlichen planaren Untergrundanteil und mindestens einen nachgiebigen, erhöhten Anteil, wobei besagtes Vlies einen oder mehrere interne Hohlräume zwischen besagtem Untergrundanteil und besagtem erhöhten Anteil umfasst, umfassend die Schritte:
a. Bereitstellen einer Precursorbahn;
b. Bereitstellen einer Trägerschicht;
c. Bereitstellen einer punktierten Oberfläche;
d. Konsolidieren von besagter Precursorbahn und besagter Trägerschicht;
e. Weiterleiten von besagter konsolidierter Bahn auf besagte punktierte Oberfläche; und
f. Hydrodynamisches Faserverwirbeln von besagter konsolidierter Bahn auf besagtem punktierten Oberflächenelement, wobei besagte Bahn mit 19-44 kW*h*N/kg (13-30 hp-hrlbf/lbm (horsepower-hour-pounds force/pounds mass)) hydraulisch beaufschlagt wird.

2. Verfahren zum Herstellen eines erhabenen, dreidimensional bebilderten Faservlieses wie in Anspruch 1, wobei besagte Trägerschicht eine thermoplastische Spunbond-Bahn ist.

3. Erhabenes, dreidimensional bebildertes Faservlies, umfassend einen Untergrundbereich, mindestens einen erhöhten Bereich, und einen oder mehrere interne Hohlräume zwischen besagtem Untergrundanteil und besagtem erhöhten Bereich, wobei besagtes Vlies einen erhöhten Bereich umfasst, der eine Rückbildungsnachgiebigkeit über 75% nach einer Dauer von 34 Stunden bei einer Zwischenlagendruckmessung von 0,014 bis 0,138 bar (0,2 bis 2,0 pounds per square inch) unter 0,34 bar (0,5 psi) Druck für eine Zeitdauer von 7 Tagen besitzt.

4. Erhabenes, dreidimensional bebildertes Faservlies wie in Anspruch 3, wobei besagter interner Hohlraum zwischen besagtem Untergrundbereich und besagtem erhöhten Bereich mit Seife imprägniert ist.

## Revendications

1. Procédé de fabrication d'un tissu non-tissé tridimensionnel gonflant comprenant une partie de fond sensiblement plane et au moins une partie en relief élastique, ledit tissu comprenant un ou plusieurs espaces vides internes entre ladite partie de fond plane et ladite partie en relief, comprenant :
a. la fourniture d'une bande de précurseur ;
b. la fourniture d'une couche de support ;
c. la fourniture d'une surface foraminée ;
d. la consolidation de ladite bande de précurseur et ladite couche de support ;
e. l'avance de ladite bande consolidée sur ladite surface foraminée ; et
f. l'hydroenchevêtrement de ladite bande consolidée sur ledit élément de support foraminé, ladite bande étant hydrauliquement soumise à impact avec 19 à 44 kW*h*N/kg (13 à 30 hp-hr-lbf/lbm (force en cheval-puissance-heure-livres/masse en livres).

2. Procédé de fabrication d'un tissu non-tissé gonflant avec image à représentation tridimensionnelle tel que dans la revendication 1, dans lequel ladite couche de support est une bande thermoplastique filée-liée.

3. Tissu non-tissé gonflant avec image à représentation tridimensionnelle, constitué d'une zone de fond, d'au moins une zone en relief, et d'un ou plusieurs espaces vides internes entre ladite zone de fond et ladite zone en relief, dans lequel ledit tissu comprend une zone en relief ayant une élasticité de reprise supérieure à 75 % après une période de 34 heures lorsqu'il est soumis à une mesure de pression intercouche de 0,014 à 0,138 bar (0,2 à 2,0 livres par pouce carré) sous 0,34 bar (0,5 psi) de pression pendant une période de temps de sept jours.

4. Tissu non-tissé gonflant avec image à représentation tridimensionnelle tel que dans la revendication 3, dans lequel ledit espace vide interne entre ladite zone de fond et ladite zone en relief est imprégné de savon.
